# EUROPEAN PATENT APPLICATION

(11) **EP 4 485 823 A1**
(43) Date of publication of application: **01.01.2025**
(21) Application number: 22927770.2
(22) Date of filing: 25.02.2022
(51) Int. Cl.: H04B 17/30

(54) **CHANNEL INTERCEPTION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: RGTH
(86) International application number: PCT/CN2022/077991
(87) International publication number: WO 2023/159484

(57) **Abstract**

Embodiments of the present application provide a channel listening method and a communication device. The communication device performs channel listening on a channel of an unlicensed spectrum by using a zero power consumption receiver or a low power consumption receiver, which may reduce power consumption of channel listening and also be more efficient to perform channel occupancy, so as to improve utilization rate of the channel. The channel listening method includes: performing, by a communication device, channel listening through a first receiver; where the first receiver is a low power consumption receiver, or the first receiver is a zero power consumption receiver.

## Description

### TECHNICAL FIELD

Embodiments of the present application relate to the field of communication, and more particularly, to a channel listening method and a communication device.

### BACKGROUND

On an unlicensed spectrum, a communication device needs to meet transmission requirements of the unlicensed spectrum before transmission, for example, it is determined whether a channel can be accessed by means of listen before talk (LBT). The communication device listens to whether the channel is idle. If it is idle, the transmission can be performed, otherwise, the transmission cannot be performed. However, power consumption of the communication device performing channel listening is relatively large, and how to reduce the power consumption of the communication device performing channel listening is a problem that needs to be solved.

### SUMMARY

Embodiments of the present application provide a channel listening method and a communication device. The communication device performs channel listening on a channel of an unlicensed spectrum by using a zero power consumption receiver or a low power consumption receiver, which may reduce power consumption of channel listening and also be more efficient to perform channel occupancy, thereby improving utilization rate of the channel.

In a first aspect, a channel listening method is provided, the method including:
performing, by a communication device, channel listening through a first receiver;
where the first receiver is a low power consumption receiver, or the first receiver is a zero power consumption receiver.

In a second aspect, a communication device is provided to perform the method in the above first aspect.

Specifically, the communication device includes a functional module to perform the method in the above first aspect.

In a third aspect, a communication device is provided, including a processor and a memory. The memory is configured to store a computer program, and the processor is configured to invoke and execute the computer program stored in the memory, to cause the communication device to perform the method in the above first aspect.

In a fourth aspect, an apparatus is provided to implement the method in the above first aspect.

Specifically, the apparatus includes a processor, and the processer is configured to invoke and execute a computer program from a memory, to cause a device equipped with the apparatus to perform the method in the above first aspect.

In a fifth aspect, a computer readable storage medium is provided, configured to store a computer program, and the computer program causes a computer to perform the method in the above first aspect.

In a sixth aspect, a computer program product is provided, including a computer program instruction. The computer program instruction causes a computer to perform a method in the above first aspect.

In a seventh aspect, a computer program is provided. The computer program, when running on a computer, causes the computer to perform the method in the above first aspect.

According to above technical solutions, the communication device may perform channel listening on a channel of an unlicensed spectrum through the low power consumption receiver or the zero power consumption receiver, which may reduce power consumption of channel listening and also be more efficient to perform channel occupancy, thereby improving utilization rate of the channel.

### BRIEF DESCRIPTION OF THE DRAWINGS

FIG. 1 is a schematic diagram of a communication system architecture applied by embodiments of the present application.
FIG. 2 is a schematic diagram of zero power consumption communication provided by the present application.
FIG. 3 is a schematic diagram of back scattering communication provided by the present application.
FIG. 4 is a schematic diagram of power harvesting provided by the present application.
FIG. 5 is a schematic circuit diagram of resistance load modulation provided by the present application.
FIG. 6 is a schematic diagram of channel access types provided by the present application.
FIG. 7 is a schematic flowchart of a channel listening method provided according to embodiments of the present application.
FIG. 8 is a schematic diagram of a first receiver and transceiver in a communication device provided according to embodiments of the present application.
FIG. 9 is a schematic diagram of an FFP provided according to embodiments of the present application.
FIG. 10 is a schematic diagram of a type of channel listening provided according to embodiments of the present application.
FIG. 11 is a schematic diagram of another type of channel listening provided according to embodiments of the present application.
FIG. 12 is a schematic diagram of yet another type of channel listening provided according to embodiments of the present application.
FIG. 13 is a schematic block diagram of a communication device provided according to embodiments of the present application.
FIG. 14 is a schematic block diagram of another communication device provided according to embodiments of the present application.
FIG. 15 is a schematic block diagram of an apparatus provided according to embodiments of the present application.
FIG. 16 is a schematic block diagram of a communication system provided according to embodiments of the present application.

### DETAILED DESCRIPTION

Technical solutions in the embodiments of the present application will be described below in conjunction with the accompanying drawings in the embodiments of the present application. It is apparent that the described embodiments are merely some but not all of embodiments of the present application. With respect to the embodiments of the present application, all other embodiments obtained by those skilled in the art without creative effort fall within the protection scope of the present application.

The technical solutions of the embodiments of the present application may be applied to various communication systems, such as, a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial communication network (Non-Terrestrial Networks, NTN) system, a universal mobile telecommunication system (UMTS), wireless local area networks (WLAN), internet of things (IoT), wireless fidelity (WiFi), a fifth-generation communication (5th-Generation, 5G) system, or other communication systems.

Generally speaking, traditional communication systems support a limited number of connections which are easy to be implemented. However, with development of the communication technology, mobile communication systems will support not only the traditional communication, but also, for example, device to device (D2D) communication, machine to machine (M2M) communication, machine type communication (MTC), vehicle to vehicle (V2V) communication, or vehicle to everything (V2X) communication. The embodiments of the present application may also be applied to these communication systems.

In some embodiments, a communication system in the embodiments of the present application may be applied to a carrier aggregation (CA) scenario, may also be applied to a dual connectivity (DC) scenario, and may also be applied to a standalone (SA) network deployment scenario, or applied to a non-standalone (NSA) network deployment scenario.

In some embodiments, the communication system in the embodiments of the present application may be applied to an unlicensed spectrum, where the unlicensed spectrum may also be considered as a shared spectrum; or the communication system in the embodiments of the present application may also be applied to a licensed spectrum, where the licensed spectrum may also be considered as an unshared spectrum.

In some embodiments, the communication system in the embodiments of the present application may be applied to a frequency band of FR1 (corresponding to a frequency band range of 410 MHz to 7.125 GHz), may also be applied to a frequency band of FR2 (corresponding to a frequency band range of 24.25 GHz to 52.6 GHz), and may also be applied to new frequency bands, such as, high frequency bands corresponding to a frequency band range of 52.6 GHz to 71 GHz or a frequency band range of 71 GHz to 114.25 GHz.

In the embodiments of the present application, each embodiments will be described in conjunction with a network device and a terminal device, where the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STATION, STA) device in the WLAN, which may be a cellular phone, a cordless phone, a session initiation protocol (SIP) phone, a wireless local loop (WLL) station, or a personal digital assistant (PDA) device, a handheld device with wireless communication functions, a computing device or other processing devices connected to a wireless modem, an in-vehicle device, a wearable device, a terminal device in a next generation communication system (e.g., an NR network), a terminal device in a future evolved public land mobile network (PLMN) network, or the like.

In the embodiments of the present application, the terminal device may be deployed on land, which includes indoor or outdoor, handheld, wearable, or in-vehicle; the terminal device may also be deployed on water (e.g., on a steamship); and the terminal device may also be deployed in air (e.g., on an airplane, on a balloon, or on a satellite).

In the embodiments of the present application, the terminal device may be a mobile phone, a pad, a computer with a wireless transceiving function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, an in-vehicle communication device, a wireless communication chip/application specific integrated circuit (ASIC)/a system on chip (SoC), or the like.

As an example but not a limitation, in the embodiments of the present application, the terminal device may also be a wearable device. The wearable device may also be referred to as a wearable smart device, which is a generic term for a wearable device by using wearable technology and intelligent design for everyday wear, such as glasses, gloves, a watch, clothing, or shoes. The wearable device is a portable device that is worn directly on a body, or integrated into a user's clothing or accessories. The wearable device is not only a hardware device, but also achieves powerful functions through software supporting as well as data interaction or cloud interaction. Generalized wearable smart devices includes full-featured, large-sized devices that may implement full or partial functionality without relying on smart phones, such as a smart watch or smart glasses, and devices that focus on a certain type of application functionality only and need to be used in conjunction with other devices (such as smart phones), such as various smart bracelets or smart jewelries for monitoring physical signs.

In the embodiments of the application, the network device may be a device used for communicating with a mobile device. The network device may be an access point (AP) device in the WLAN, a base station (Base Transceiver Station, BTS) in the GSM or CDMA, may also be a base station (NodeB, NB) in the WCDMA, or may also be an evolutional base station (Evolutional Node B, eNB or eNodeB) in the LTE, a relay station or an access point, a network device or base station (gNB) in an in-vehicle device, a wearable device, a network device in an NR network, a network device in the future evolved PLMN network, a network device in the NTN network, or the like.

As an example but not a limitation, in the embodiments of the present application, the network device may have a mobile characteristic, for example, the network device may be a mobile device. In some embodiments, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite. In some embodiments, the network device may also be a base station provided on land, water, and other places.

In the embodiments of the present application, the network device may provide services for a cell, and the terminal device communicates with the network device through transmission resources (such as a frequency domain resources, or frequency spectrum resources) used by the cell. The cell may be a cell corresponding to the network device (such as the base station). The cell may belong to a macro base station or a base station corresponding to a small cell. The small cell here may include a metro cell, a micro cell, a pico cell, a femto cell, or the like. These small cells have characteristics of small coverage range and low transmission power, which are applicable for providing a data transmission service with high speed.

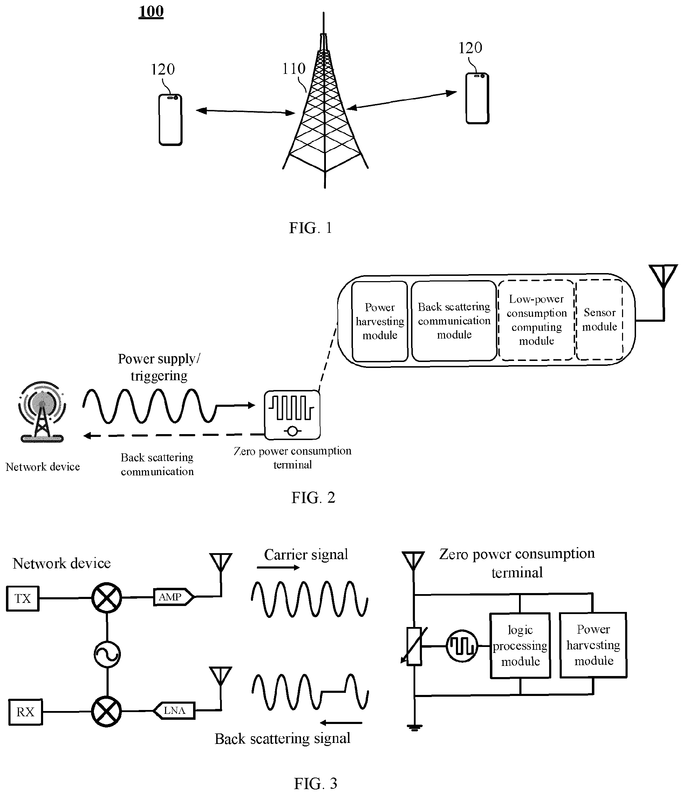

Exemplarily, a communication system 100 applied by the embodiments of the present application is illustrated in FIG. 1. The communication system 100 may include a network device 110, and the network device 110 may be a device used to communicate with a terminal device 120 (or referred to as a communication terminal or terminal). The network device 110 may provide communication coverage for a specific geographic area and communicate with terminal devices located within the coverage area.

FIG. 1 exemplarily illustrates one network device and two terminal devices. In some embodiments, the communication system 100 may include multiple network devices, and coverage range of each network device may be provided therein with other numbers of terminal devices, which is not limited in the embodiments of the present application.

In some embodiments, the communication system 100 may further include other network entities such as a network controller, a mobile management entity, which are not limited in the embodiments of the present application.

It should be understood that a device in a network/system having a communication function in the embodiments of the present application may be referred to as a communication device. Taking the communication system 100 illustrated in FIG. 1 as an example, the communication device may include the network device 110 and the terminal device 120 with the communication function, and the network device 110 and the terminal device 120 may be the specific devices as described above, which will not be repeated here. The communication device may further include other devices in the communication system 100, such as a network controller, a mobility management entity, and other network entities, which are not limited in the embodiments of the present application.

It should be understood that, the terms "system" and "network" are often used interchangeably herein. The term "and/or" herein is only an association relationship to describe associated objects, meaning that there may be three relationships between associated objects, for example, "A and/or B" may represent: A exists alone, both A and B exist, and B exists alone. In addition, a character "/" herein generally means that related objects before and after this character are in an "or" relationship.

It should be understood that, the present application herein relates to a first communication device and a second communication device. The first communication device may be a terminal device, for example, a mobile phone, a machine facility, a customer premise equipment (CPE), an industrial device, a vehicle, an RFID tag, a zero power consumption tag. The second communication device may be a peer communication device of the first communication device, for example, a network device, a mobile phone, an industrial device, a vehicle. Herein, described as a specific example with the first communication device being a terminal device and the second communication device being a network device.

Terms used in the section of detailed description are used only for explanation of specific embodiments of the present application and are not intended to limit the present application. The terms "first", "second", "third", "fourth" and the like in the specification and claims of the present application and the drawings are used to distinguish different objects and are not used to describe a specified sequence. Furthermore, the terms "include" and "have" and any variations thereof are intended to cover non-exclusive inclusion.

It should be understood that, "indicate" mentioned in the embodiments of the present application may mean a direct indication or an indirect indication, or represent that there is an association relationship. For example, A indicates B, which may mean that A directly indicates B, for example, B may be obtained through A; or it may mean that A indirectly indicates B, for example, A indicates C, and B may be obtained through C; or it may mean that there is an association relationship between A and B.

In the description of the embodiments of the present application, the term "correspond" may mean that there is a direct correspondence or indirect correspondence between the two, or it may mean that there is an associated relationship between the two, or it may mean a relationship of indicating and being indicated, or configuring and being configured, or the like.

In the embodiments of the present application, "predefined" or "preconfigured" may be achieved by pre-storing corresponding codes, forms or other means used for indicating relevant information in devices (e.g., including a terminal device and network device), and the present application is not limited to the specific implementation thereof. For example, predefined may refer to what is defined in a protocol.

In the embodiment of the present application, the "protocol" may be a standard protocol in the communication field. For example, the protocol may include an LTE protocol, an NR protocol, and related protocols applied in a future communication system, which are not limited in the present application.

To facilitate understanding of the technical solutions of the embodiments of the present application, the technical solutions of the present application are described in detail below through specific embodiments. The following related technologies, as optional solutions, may be arbitrarily combined with the technical solutions of the embodiments of the present application, and those combined solutions all belong to the protection scope of the embodiments of the present application. The embodiments of the present application include at least part of following contents.

In recent years, zero power consumption devices have become more widely used. A typical zero power consumption device is a device based on radio frequency identification (RFID), and the RFID is a technology that utilizes spatial coupling of radio frequency signals to implement contactless automatic transmission and identification of tag information. A RFID tag is also referred to as "radio frequency tag" or "electronic tag". According to the difference in power supply methods, electronic tags may be categorized into three types of tags, i.e., active electronic tags, passive electronic tags and semi-passive electronic tags. An active electronic tag, also referred to as voluntary electronic tag, mean that power of the electronic tags for working is provided by a battery, and the battery, a memory and an antenna together constitute the active electronic tag. Different from an activation way of passive radio frequency, messages are always transmitted by a set frequency band before the battery is replaced. A passive electronic tag, also referred to as inactive electronic tag, do not support a built-in battery. When the passive electronic tag approaches a reader-writer, the tag is within a near-field range formed by radiation of an antenna of the reader-writer, an antenna of the electronic tag generates an induced current through electromagnetic induction, and the induced current drives a chip circuit in the electronic tag. The chip circuit transmits identification information stored in the tag to the reader-writer through the antenna of the electronic tag. The semi-active electronic tag inherit advantages of the passive electronic tag, such as small size, light weight, low price, and long service life. The built-in battery only provides power for a few circuits inside the chip when there is no reader-writer access. Only when the reader-writer accesses, the built-in battery supplies power to the RFID chip to increase reading and writing distances of the tag and improve reliability of communication.

The RFID is a wireless communication technology. The most basic RFID system is composed of two parts: an electronic tag (TAG) and a reader-writer (Reader/Writer). For the electronic TAG: it is composed of a coupling component and a chip, and each electronic TAG has a unique electronic number, which is placed on a target to be measured to achieve a purpose of marking the target object. For the reader-writer: it may not only read information on the electronic TAG, but also write the information on the electronic TAG, and also provide power required for communication for the electronic TAG. As illustrated in FIG. 2, after entering an electromagnetic field, the electronic TAG receives a radio frequency signal transmitted by the reader-writer, the passive electronic TAG or inactive electronic TAG transmits information stored in the electronic TAG by using power generated by the electromagnetic field in space; and the reader-writer reads the information and decodes the information to identify the electronic TAG.

Key technologies of the zero power consumption communication include power harvesting and back scattering communication as well as low power consumption computing. As illustrated in FIG. 2, a typical zero power consumption communication system includes a reader-writer and a zero power consumption terminal. The reader-writer emits radio waves for supplying power to the zero power consumption terminal. A power harvesting module installed in the zero power consumption terminal may harvest power carried by the radio waves in space (radio waves emitted by the reader-writer are illustrated in FIG. 2), to drive a low power consumption computing module of the zero power consumption terminal and realize back scattering communication. After obtaining the power, the zero power consumption terminal may receive a control command from the reader-writer and transmit data to the reader-writer based on a back scattering mode according to a control signaling. The transmitted data may come from data stored by the zero power consumption terminal itself (for example, an identification or pre-written information, such as a production date, a brand, a manufacturer of a product). The zero power consumption terminal may also be provided with various sensors, so as to report data harvested by various sensors based on the zero power consumption mechanism.

In order to facilitate a better understanding of the embodiments of the present application, the back scattering communication (Back Scattering) related to the present application will be described.

As illustrated in FIG. 3, the zero power consumption device (a back scattering tag illustrated in FIG. 3) receives a carrier signal transmitted by a back scattering reader-writer, and harvests power through a radio frequency (RF) power harvesting module, which is functioned to a low power consumption processing module (a logic processing module illustrated in FIG. 3) to modulate an incoming wave signal and perform back scattering.

Main characteristics of the back scattering communication are as follows:
(1) the terminal does not transmit a signal actively, but realizes the back scattering communication by modulating an incoming wave signal;
(2) the terminal does not rely on a traditional active power amplifier transmitter, but use a low power consumption computing unit, thereby greatly reducing hardware complexity; and
(3), battery-free communication may be achieved in combination with power harvesting.

In order to facilitate a better understanding of the embodiments of the present application, the RF power harvesting (Power Harvesting) related to the present application will be described.

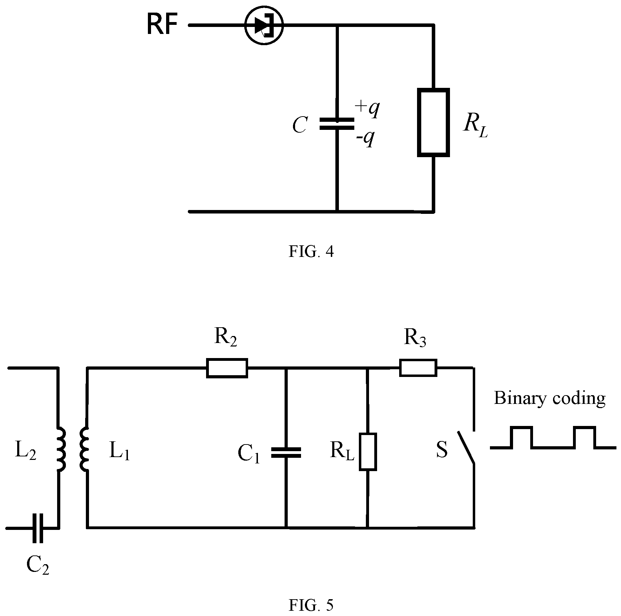

As illustrated in FIG. 4, an RF module is utilized to harvest power of electromagnetic waves in space through electromagnetic induction, which may realize drive of a load circuit (low power consumption computing, sensor, etc.), thereby achieving battery-free.

In order to facilitate a better understanding of the embodiments of the present application, load modulation related to the present application will be described.

Load modulation is a method often used by an electronic TAG to transmit data to a reader-writer. The load modulation completes a modulation process by adjusting electrical parameters of an oscillation circuit of the electronic TAG according to a beat of data stream to change a size and phase of impedance of the electronic TAG accordingly. There are two main types of the load modulation technology mainly, which are resistive load modulation and capacitive load modulation. In the resistive load modulation, the load is connected in parallel with a resistor, which is referred to as a load modulation resistor. The resistor is turned on and off according to a clock of the data stream, and the on-off of a switch S is controlled by binary data coding. The schematic circuit diagram of resistive load modulation is illustrated in FIG. 5.

In the capacitive load modulation, the load is paralleled by a capacitor, replacing the load modulation resistor controlled by the binary data coding shown in FIG. 5.

In order to facilitate a better understanding of the embodiments of the present application, encoding technologies related to the present application will be described.

For data transmitted by an electronic TAG, different forms of codes may be used to represent "1" and "0" of binary. A radio frequency identification system typically use one of the following coding methods: reverse non-return-to-zero (NRZ) encoding, Manchester encoding, unipolar return-to-zero (Unipolar RZ) encoding, differential bi-phase (DBP) encoding, Miller encoding and differential encoding. Generally speaking, it means that different pulse signals are used to represent 0 and 1.

In order to facilitate a better understanding of the embodiments of the present application, a power supply signal in the zero power consumption communication system related to the present application will be described.

In terms of a carrier of the power supply signal, it may be a base station, a smart phone, a smart gateway, a charging station, a micro base station, or the like.

In terms of a frequency band, radio waves used for power supply may be low frequency, intermediate frequency, high frequency, or the like.

In terms of a waveform, radio waves used for power supply may be sine waves, square waves, triangular waves, pulses, rectangular waves, or the like. In addition, the radio waves used for power supply may be continuous waves or discontinuous waves (i.e., a certain time interruption is allowed).

The power supply signal may be a certain signal specified in the third generation partnership project (The 3rd Generation Partnership Project, 3GPP) standard. For example, a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), a physical broadcast channel (PBCH), or the like.

In order to facilitate a better understanding of the embodiments of the present application, a trigger signal in the zero power consumption communication system related to the present application will be described.

In terms of a carrier of the trigger signal, it may be a base station, a smart phone, a smart gateway, or the like.

In terms of a frequency band, radio waves used for triggering may be low frequency, intermediate frequency, high frequency, or the like.

In terms of a waveform, radio waves used for triggering may be sine waves, square waves, triangular waves, pulses, rectangular waves, or the like. In addition, the radio waves used for triggering may be continuous waves or discontinuous waves (i.e., a certain time interruption is allowed).

A trigger signal may be a certain signal specified in the 3GPP standard. For example, an SRS, a PUSCH, a PRACH, a PUCCH, a PDCCH, a PDSCH, a PBCH, or the like. The trigger signal may be a new signal.

In order to facilitate a better understanding of the embodiments of the present application, a cellular passive Internet of Things related to the present application will be described.

With the increase of 5G industry applications, there are more and more types of connected objects and application scenarios, and there will be higher requirements for price and power consumption of communication terminals. Applications of passive Internet of Things devices with battery-free and low-cost have become key technologies of a cellular Internet of Things, to enrich types and quantities of terminals linked to the 5G network and truly realize the Internet of everything. Herein, the passive Internet of Things devices may be based on existing zero power consumption devices, such as the RFID technology, and extended on this basis to applicable to the cellular Internet of Things.

In order to facilitate a better understanding of the embodiments of the present application, categories of the zero power consumption terminal related to the present application will be described.

Based on power sources and the usages of zero power consumption terminals, the zero power consumption terminals may be categorized into the following types.

### 1) Passive zero power consumption terminal

A passive zero power consumption terminal does not require a built-in battery. When the zero power consumption terminal approaches to a network device (such as, a reader-writer of an RFID system), the zero power consumption terminal is within a near-field range formed by antenna radiation of a network device. Therefore, an antenna of the zero power consumption terminal generates an induced current through electromagnetic induction, and the induced current drives a low power consumption chip circuit of the zero power consumption terminal, which realizes demodulation for a forward link signal and modulation for a backward link signal. For a back scattering link, the zero power consumption terminal transmits signals by means of back scattering.

It can be seen that the passive zero power consumption terminal does not require the built-in battery to drive whether it is in the forward link or a reverse link, and is a true zero power consumption terminal.

Since the passive zero power consumption terminal does not require the battery, and a radio frequency circuit and baseband circuit are very simple, for example, there is no need for devices such as a low noise amplifier (LNA), a power amplifier (PA), a crystal oscillator, an analog-to-digital converter (ADC), the passive zero power consumption terminal has many advantages such as small size, light weight, very cheap price and long service life.

### 2) Semi-passive zero power consumption terminal

A semi-passive zero power consumption terminal itself does not install a conventional battery therein, but may use an RF power harvesting module to harvest radio wave power and store harvested power in a power storage unit (such as a capacitor). After obtaining the power, the low power consumption chip circuit of the zero power consumption terminal may be driven, which realizes demodulation for a forward link signal and modulation for a backward link signal. For a back scattering link, the zero power consumption terminal transmits signals by means of back scattering.

It can be seen that the semi-passive zero power consumption terminal does not require a built-in battery to drive whether it is in the forward link or a reverse link. Although power stored in the capacitor is used in the work, the power comes from the radio power harvested by the power harvesting module. Therefore, it is also a true zero power consumption terminal.

The semi-passive zero power consumption terminal inherits many advantages of the passive zero power consumption terminal, and thus it has many advantages such as small size, light weight, very cheap price, long service life.

### 3) Active zero power consumption terminal

The zero power consumption terminal used in some scenarios may also be an active zero power consumption terminal, which may have a built-in battery. The battery is used to drive the low-power consumption chip circuit of the zero power consumption terminal to realize demodulation of the forward link signal and modulation of a backward link signal. However, for a back scattering link, the zero power consumption terminal transmits signals by means of back scattering. Therefore, zero power consumption of this type of terminals is mainly reflected in the fact that the signal transmission of a reverse link does not require power of the terminal itself, but uses the manner of back scattering.

The active zero power consumption terminal supply the power to the RFID chip through the built-in battery, which may increase reading and writing distances of a tag and improve reliability of communication. Therefore, it can be applied in some scenarios with relatively high requirements on communication distance, reading delay, or the like.

In order to facilitate a better understanding of the embodiments of the present application, an unlicensed spectrum related to the present application will be described.

An unlicensed spectrum is a spectrum which is divided by countries and regions and may be used for wireless device communication. This spectrum is usually considered to be a shared spectrum, that is, as long as communication devices in different communication systems meet regulatory requirements set by the countries and regions on the spectrum, the spectrum may be used without applying for a dedicated spectrum license from governments. In order to enable various wireless communication systems that use the unlicensed spectrum for wireless communication to coexist amicably on this spectrum, some countries or regions have specified the regulatory requirements that must be met for the use of the unlicensed spectrum. For example, in Europe, communication devices follow a principle of "listen before talk (LBT)", that is, the communication device needs to perform channel listening before transmitting signals on a channel of the unlicensed spectrum. The communication device may transmit the signals only when a result of channel listening is that the channel is idle. If the result of channel listening of the communication device on the channel of the unlicensed spectrum is that the channel is busy, the communication device cannot perform signal transmission. In addition, in order to ensure fairness, duration of signal transmission by the communication device using the channel of the unlicensed spectrum in one transmission cannot exceed a maximum channel occupation time (MCOT).

In order to facilitate a better understanding of the embodiments of the present application, channel listening related to the present application will be described.

A principle of channel monitoring is that the communication device performs LBT on a carrier of the unlicensed spectrum after a service arrival, and starts signal transmission on the carrier after the LBT is successful. LBT modes of dynamic channel monitoring include a type 1 (Type1) channel access mode and a type 2 (Type2) channel access mode. The Type1 channel access mode is multi-slot channel detection with random back-off adjusted based on contention window size, where a corresponding channel access priority class (CAPC) p may be selected according to a priority of a service to be transmitted. The Type2 channel access mode is a channel access mode based on a monitoring slot with fixed length. The Type2 channel access mode includes Type2A channel access, Type2B channel access and Type2C channel access. The Type1 channel access mode is mainly used for the communication device to initiate channel occupancy, and the Type2 channel access mode is mainly used for the communication device to share channel occupancy. A special case to be noted is that when a base station initiates channel occupancy for transmission of a synchronization signal block (SSB) in a discovery reference signal (DRS) window and the DRS window does not include a unicast data transmission of a UE, if a length of the DRS window does not exceed 1 ms and a duty ratio of the DRS window transmission does not exceed 1/20, the base station may initiate channel occupancy by using the Type2A channel access.

It should be noted that the SSB may also be referred to as a synchronization signal/physical broadcast channel block (SS/PBCH block).

### 1. Default channel access mode at a base station side: Type1 channel access

Taking a base station as an example, channel access parameters corresponding to the channel access priority p of the base station side are shown in Table 1. In the Table 1, mp refers to a number of back-off slots corresponding to the channel access priority p, CWp refers to a size of a contention window (CW) corresponding to the channel access priority p, CWmin,p refers to a minimum value of the CWp value corresponding to the channel access priority p, CWmax,p refers to a maximum value of the CWp value corresponding to the channel access priority p, and Tmcot,p refers to a length of a maximum channel occupation time corresponding to the channel access priority p.

The base station may select a corresponding channel access priority p according to a priority of a service to be transmitted, and obtain a channel occupancy time (COT) of a channel on a carrier of the unlicensed spectrum, that is, the COT initiated by the base station, by using the Type1 channel access mode according to the channel access parameters corresponding to the channel access priority p in the Table 1. Specifically, the following steps may be included:
(1) setting a counter N=Ninit, where Ninit is a random number uniform distributed between 0 and CWp, and performing step (4);
(2) if N>0, decrementing 1 from the counter by the base station, that is, N=N-1;
(3) performing a monitoring slot detection with a length of Tsl on the channel (Tsl represents an LBT monitoring slot with a length of 9 µs), and if the monitoring slot is idle, performing step 4); otherwise, performing step (5);
(4) if N = 0, terminating a channel access procedure; otherwise, performing step (2);
(5) performing a monitoring slot detection with a length of Td on the channel (Td = 16 + mp*9 µs), and a result of the monitoring slot detection being either that at least one monitoring slot is occupied or that all monitoring slots are idle; and
(6) if a result of channel monitoring is that all monitoring slots are idle in Td duration, performing step (4); otherwise, performing step 5).

**Table 1**

| **channel access priority (*p*)** | **mp** | **CW _{min,p}** | **CW _{max,p}** | **T_{mcot,p}** | **Allowed CWₚ Values** |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 or 10 ms | {15, 31, 63} |
| 4 | 7 | 15 | 1023 | 8 or 10 ms | {15, 31, 63, 127, 255, 511, 1023} |

If the channel access procedure is terminated, the base station may use the channel to transmit the service to be transmitted. A maximum time length for which the base station may use the channel for transmission cannot exceed Tmcot,p.

Before the base station starts step 1) of the Type1 channel access mode above, the base station needs to maintain and adjust the size of the contention window CWp. Initially, the size of the contention window CWp is set to the minimum value CWmin,p. In a procedure of transmission, the size of the contention window CWp may be adjusted within a allowable CWp value range according to an acknowledgement (ACK) or a negative acknowledgement (NACK) information received by the base station fed back from a UE. If the contention window CWp has been increased to the maximum value CWmax,p, the size of the contention window CWp may be reset to the minimum value CWmin,p after the maximum contention window CWmax,p has been maintained for a certain number of times.

### 2. Channel occupancy time sharing at the base station side

After the base station initiates the COT, in addition to using resources within the COT for downlink transmission, the resources within the COT may also be shared to the UE for uplink transmission. In a case where the resources within the COT are shared to the UE for uplink transmission, the channel access modes that the UE may use are: the Type2A channel access, the Type2B channel access or the Type2C channel access, where the Type2A channel access, the Type2B channel access and the Type2C channel access are all channel access modes based on a monitoring slot with a fixed length.

The Type2A channel access: a channel detection mode of the UE is 25 µs single-slot channel detection. Specifically, under the Type2A channel access, the UE may perform channel monitoring for 25 µs before starting transmissions, and perform transmission after channel monitoring is successful.

The Type2B channel access: a channel detection mode of the UE is 16 µs single-slot channel detection. Specifically, under the Type2B channel access, the UE may perform channel monitoring for 16 µs before starting transmissions, and perform transmission after channel monitoring is successful. A size of a gap between a start position of this transmission and an end position of the last transmission is 16 µs.

The Type2C channel access: the UE performs transmission without channel detection after the gap ends. Specifically, under the Type2C channel access, the UE may directly perform transmission, where the size of the gap between the start position of the transmission and the end position of the last transmission is less than or equal to 16 µs, and a length of the transmission does not exceed 584 µs.

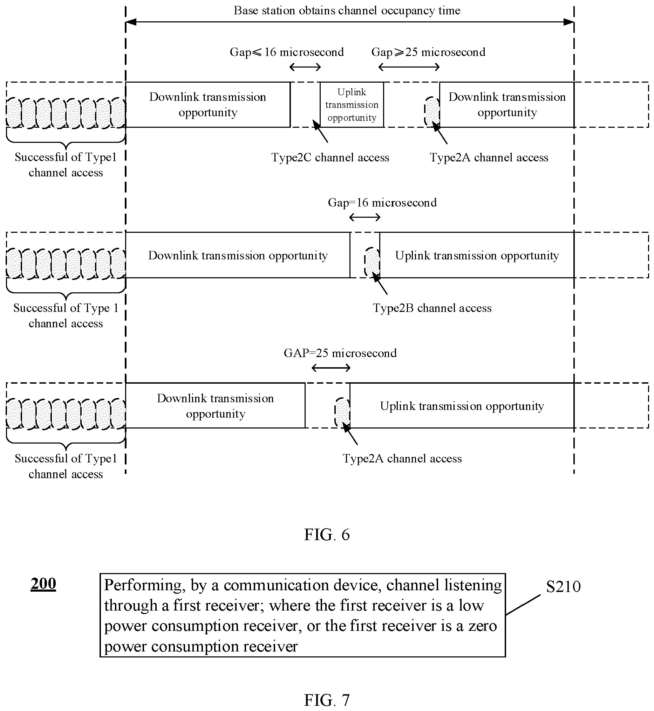

Different channel access schemes are applied in different COT sharing scenarios. For an uplink transmission opportunity occurring within the COT of the base station, if a gap between a start position of the uplink transmission opportunity and an end position of the downlink transmission opportunity is less than or equal to 16 µs, the UE may perform Type2C channel access before the uplink transmission. If the gap between the start position of the uplink transmission opportunity and the end position of the downlink transmission opportunity is equal to 16 µs, the UE may perform Type2B channel access before the uplink transmission. If the gap between the start position of the uplink transmission opportunity and the end position of the downlink transmission opportunity is equal to 25 µs or greater than 25 µs, the UE may perform Type2A channel access before the uplink transmission. In addition, multiple uplink and downlink transition points may be included in the COT obtained by the base station. In a case where the base station shares the COT obtained by itself to the UE for uplink transmission, within the COT, the base station may also use a mode of Type2 channel access, for example, perform channel monitoring by using the mode of Type2A channel access, and restart downlink transmission after channel monitoring is successful. FIG. 6 illustrated an example of COT sharing at the base station side.

In order to facilitate an understanding of the technical solutions of the embodiments of the present application, the problems solved by the present application will be described as following.

As shown in Table 1 above, for different channel access priorities, their MCOTs are different, but the maximum length is only 10 ms. If the communication device needs to continue using the channel, it is necessary to re-perform a clear channel assessment (CCA), and when a result of the CCA is that the channel is idle, the channel may be regained. This will inevitably cause interruptions of channel transmission. In order to utilize the unlicensed spectrum more efficiently, after obtains a downlink channel, and when certain conditions are met, the uplink transmission of the base station within the MCOT range may not need to perform LBT that is, downlink transmission and uplink transmission share the channel of the unlicensed spectrum within the MCOT time. In this way, when the base station obtains the channel for downlink transmission, a feedback transmitted through the uplink channel, such as a hybrid automatic repeat request (Hybrid Automatic Repeat request, HARQ) feedback, may be obtained before the occupied channel ends. However, only MCOT-length channels are occupied each time, and power consumption of performing channel listening is relatively large.

Based on the above technical problems, the present application provides a channel listening scheme. A communication device performs channel listening on a channel of an unlicensed spectrum by using a zero power consumption receiver or a low power consumption receiver, which may reduce power consumption of channel listening and also be more efficient to perform channel occupancy, thereby improving utilization rate of the channel.

The technical solutions of the present application are described in detail below through specific embodiments.

FIG. 7 is a schematic flowchart of a wireless communication method 200 according to the embodiments of the present application. As illustrated in FIG. 7, the wireless communication method may include at least part of the following:
S210, performing, by a communication device, channel listening through a first receiver; where the first receiver is a low power consumption receiver, or the first receiver is a zero power consumption receiver.

In the embodiments of the present application, the first receiver is the low power consumption receiver, or the first receiver is the zero power consumption receiver. Specifically, power consumption of the low power consumption receiver is less than a preset value, and the low power consumption receiver may obtain power through the communication device to which it belongs, or similar to a zero power consumption device, the low power consumption receiver obtains power through power harvesting for communication, information collection and processing. The zero power consumption receiver may obtain power through power harvesting for communication, information collection and processing.

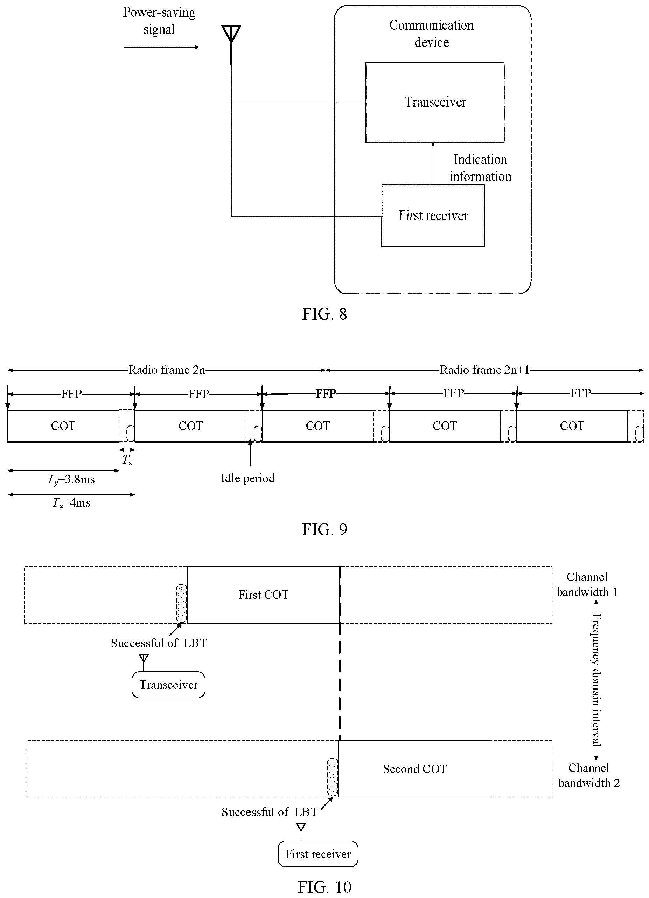

In some embodiments, the communication device may include a first receiver and a transceiver (also referred to as a primary transceiver), and the transceiver may be a conventional transceiver, as illustrated in FIG. 8. Herein, the first receiver may perform channel listening using a first transmission mode, and the transceiver may perform channel listening using a second transmission mode. Specifically, under the same condition for example when both are used for channel listening, power consumption of the first transmission mode is smaller than that of the second transmission mode. Different from the transceiver, the first receiver is a receiver with extremely low power consumption or even zero power consumption, which adopts similar technologies of the radio frequency identification (RFID) technology, including passive, envelope detection, power harvesting, or the like. The first receiver may be activated and powered by a radio frequency signal, to drive the first receiver to perform channel listening, and for further transmit indication information to the transceiver in a case where a result of listening performed by the first receiver is that the channel is idle, which may be used to wake up or open the transceiver to further perform channel occupancy and data transmission and reception. The first receiver may be combined with the communication device as an additional module of the transceiver of the communication device, or may be a separate functional module of the communication device.

In some embodiments, the communication device may also receive other signals such as wake-up signals or power-saving signals through the first receiver, which is not limited in the present application.

It should be noted that the first receiver has characteristics of extremely low cost, extremely low complexity and extremely low power consumption, which mainly receives signals by means of envelope detection. Demodulation of a envelope signal is also mainly accomplished by driving a low power consumption circuit based on power provided by the radio frequency signal, and thus the first receiver may be passive. The first receiver may also be powered by the communication device. Regardless of the power supply mode, the first receiver greatly reduces the power consumption compared with a traditional receiver of the communication device.

The embodiments of the present application may be applied to the unlicensed spectrum, and the use of the unlicensed spectrum needs to comply with "listen before talk". The communication device needs to perform channel listening before transmitting signals on a channel of the unlicensed spectrum. The communication device may transmit the signals only when a result of channel listening is that the channel is idle. The unlicensed spectrum may also be referred to as unauthorized spectrum, which is not limited in the present application.

In some embodiments, the communication device may be a device that communicates using the unlicensed spectrum. Specifically, for example, the communication device is a terminal device or a network device for uplink and downlink communication in a cellular network, or the communication device is a terminal device for sidelink (SL) communication in a cellular network, or the communication device is an AP device or a STA device in a WLAN.

In some embodiments, the communication device performs channel listening within a first COT through the first receiver; and/or the communication device performs channel listening outside the first COT through the first receiver; where the first COT is a COT obtained by the communication device through channel listening.

In some embodiments, where the first COT being the COT obtained by the communication device through the channel listening includes: the first COT being a COT obtained by channel listening performed by the communication device through the first receiver, or the first COT being a COT obtained by channel listening performed by the communication device through the transceiver.

In some embodiments, the transceiver of the communication device is in a transmitting state within the first COT, or the transceiver of the communication device is in a receiving state within the first COT.

In some embodiments, in a case where the communication device performs channel listening within the first COT through the first receiver, a frequency of a channel corresponding to the first COT is different from a frequency of a channel to which the communication device listens through the first receiver. For example, the frequency of the channel corresponding to the first COT and the frequency of the channel to which the communication device listens through the first receiver are different 20 MHz bandwidth.

In some embodiments, a frequency interval between the frequency of the channel corresponding to the first COT and the frequency of the channel to which the communication device listens through the first receiver is greater than or equal to a first threshold.

In some embodiments, the first threshold is specified by a protocol, or the first threshold is configured by a network device.

Specifically, for example, the communication device performs channel listening within the first COT using the first receiver, and the transceiver of the communication device is in the transmitting state as well as the first receiver is in the receiving state. This will cause signal leakage and generate interference. When the frequency of the channel used by the transceiver of the communication device within the first COT meets a certain interval with the frequency of the channel on which the first receive performs channel listening, the interference may be reduced.

Specifically, for example, the communication device performs channel listening within the first COT using the first receiver, and the transceiver of the communication device is in the receiving state as well as the first receiver is in the receiving state. For example, in a NR-U technology, a COT may be shared between a base station and a terminal, the first COT obtained by the communication device is shared to other communication devices for use, during which the communication device may also perform channel listening through the first receiver. This will also cause signal leakage and generate interference. When the frequency of the channel used by the transceiver of the communication device within the first COT meets a certain interval with the frequency of the channel on which the first receiver performs channel listening, the interference may be reduced.

In some embodiments, the communication device determines whether to perform channel listening through the first receiver according to a semi-statically configured channel listening mode. For example, Channel listening modes may be shown in Table 2.

**Table 2**

| Serial number | Channel listening mode | Description |
|---|---|---|
| 1 | First receiver of communication device | within COT |
| 2 | Transceiver for communication device | outside COT |
| 3 | First receiver or transceiver of communication device | within COT or outside COT |

In some embodiments, a receiver used by the communication device to perform listening within the first COT is different from a receiver used by the communication device to perform listening outside the first COT.

In some embodiments, receivers used by the communication device to perform listening within and outside the first COT are specified by a protocol, or the receivers used by the communication device to perform listening within and outside the first COT are configured by a network device. For example, in a case where the communication device is a terminal device for uplink and downlink communication in the cellular network, the network device is a network device for uplink and downlink communication in the cellular network. For another example, in a case where the communication device is a terminal device for sidelink communication in the cellular network, the network device is a network device for uplink and downlink communication in the cellular network. For yet another example, in a case where the communication device is a STA device in the WLAN, the network device is an AP device in the WLAN.

In the embodiments of the present application, channel listening includes two mechanisms, one is LBT based on a load-based equipment (LBE), also referred to as dynamic channel listening or dynamic channel occupancy, and the other is LBT based on a frame structure based equipment (frame based equipment, FBE), also referred to as semi-static channel listening or semi-static channel occupancy.

It should be noted that in the channel access mechanism of the FBE in NR-U technology, or in other words, in a semi-static channel access mode, the frame structure occurs periodically, that is, channel resources that the communication device may use for service transmission occur periodically. A frame structure includes a fixed frame period (FFP), a channel occupancy time (COT), and an idle period (IP). Herein, a length of the fixed frame period may be configured in a range of 1 to 10 ms, a length of the COT in the fixed frame period does not exceed 95% of the length of the FFP, a length of the idle period is at least 5% of the length of the FFP, and a minimum value of a length of the IP is 100 µs, and the idle period is located at the end of the fixed frame period. The communication device performs LBT on the channel based on a monitoring slot with a fixed length within an idle period. If the LBT is successful, a COT in a next fixed frame period may be used to transmit signals. If the LBT fails, the COT in the next fixed frame period cannot be used to transmit signals. In a NR-U system, the COT initiated by the base station is supported in the semi-static channel access mode. During a fixed frame period, a UE may perform uplink transmission in the fixed frame period only when downlink transmission of the base station is monitored.

In some embodiments, the semi-static channel access mode may be configured by the base station through system information or high layer parameters. If a serving cell is configured by the base station in the semi-static channel access mode, a length of the FFP of the fixed frame period of the serving cell is Tx, a maximum COT length included in the fixed frame period of the serving cell is Ty, and a length of the idle period included in the FFP of the serving cell is Tz. Herein, the length Tx of the fixed frame period (FFP) that may be configured by the base station is 1 ms, 2 ms, 2.5 ms, 4 ms, 5 ms, or 10 ms. A UE may determine Ty and Tz according to the configured Tx length. Specifically, starting form an even-numbered radio frame, within every two consecutive radio frames, the UE may determine a starting position of each FFP based on x•Tx, where xE {0, 1, ..., 20/Tx - 1}, the maximum COT length within the FFP is Ty = 0.95•Tx, and the length of the idle period within the FFP is at least Tz = max (0.05•Tx, 100µs).

For example, FIG. 9 illustrates an example for a length of a fixed frame period with 4 ms. As illustrated in FIG. 9, after receiving the FFP length Tx = 4 ms configured by the base station, the UE may determine x ∈ {0, 1, 2, 3, 4} according to x ∈ {0, 1, •••, 20/Tx - 1}, and then the UE may determine that the starting position of each FFP within every two consecutive radio frames is 0 ms, 4 ms, 8 ms, 12 ms, 16 ms. Within each FFP, a maximum COT length is Ty = 3.8 ms and the length of the idle period is Tz = 0.2 ms.

In some embodiments, the communication device performs channel occupancy and data transmission on a target channel within a second COT through a transceiver in a case where a result of channel listening of the first receiver indicates that the target channel is idle and the second COT is obtained.

In some embodiments, the communication device determines, according to a size of a gap between the first COT and the second COT, a type of channel listening to be performed by the transceiver of the communication device prior to start of the second COT.

In some embodiments, channel listening performed by the communication device through the first receiver is dynamic channel listening.

Specifically, for example, as illustrated in FIG. 10, the communication device obtains the first COT by a successful LBT performed on a channel bandwidth 1 through the transceiver; the communication device performs channel listening on a channel bandwidth 2 within the first COT through the first receiver, and when a result of the channel listening of the first receiver is idle, that is, the LBT is successfully performed on the channel bandwidth 2, then the second COT is obtained. The communication device may indicate, through the first receiver, that the transceiver of the communication device performs channel occupancy and data transmission on the second COT.

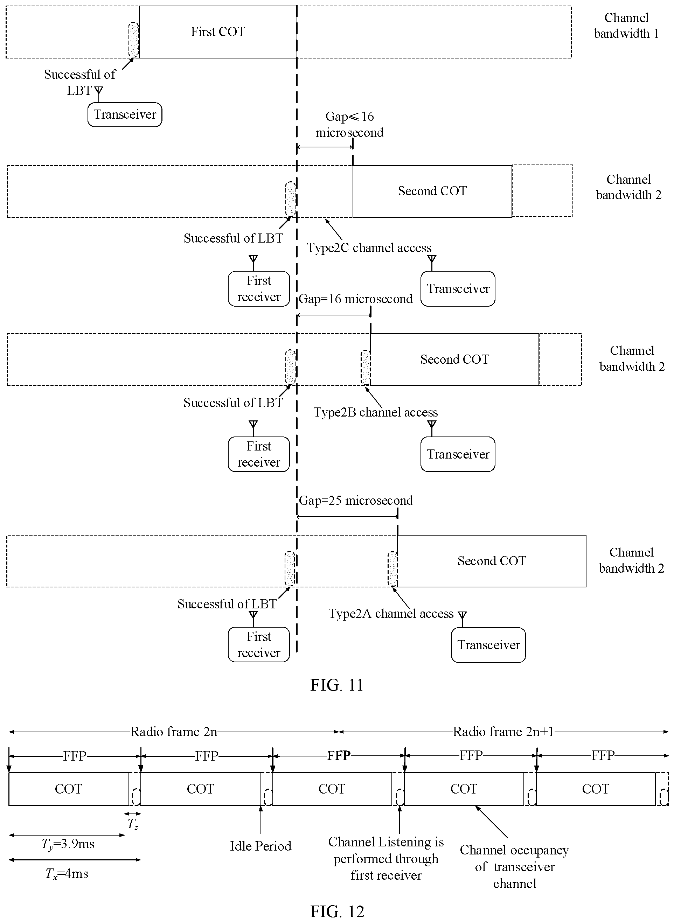

Specifically, for another example, there may be a certain gap when the transceiver of the communication device switches to channel occupancy on the channel bandwidth 2 after the channel occupancy on channel bandwidth 1 has ended. In a COT sharing scenario, a size of a gap between downlink and uplink transmissions determines a type of channel listening that needs to be performed after the gap. In the embodiments, the communication device determines a type of channel listening that needs to be performed by the transceiver of the communication device at a beginning of the second COT according to a size of a gap between the first COT and the second COT. As illustrated in FIG. 11, the communication device determines that the transceiver of the communication device performs Type2A, Type2B, or Type2C channel listening prior to start of the second COT according to the size of the gap.

In some embodiments, the first COT is a COT within a first fixed frame period (FFP), and the second COT is a COT within a second FFP, where the second FFP is a next FFP of the first FFP. Specifically, for example, channel listening performed by the communication device through the first receiver is semi-static channel listening.

In some embodiments, if the communication device is provided with the first receiver, when the semi-static channel listening is employed, such as the base station, channel listening may be performed through the first receiver during the idle period within the FFP. In this way, there is no need for the transceiver of the communication device to perform transmitting and receiving states transition in the idle period to perform channel listening, the length of the COT may be expanded as much as possible within the FFP, the length of the idle period may be reduced, and the utilization rate of the channel may be improved. As illustrated in FIG. 12, after the communication device performs channel listening through the first receiver, within each FFP, the maximum COT length is Ty = 3.9 ms, and the length of the idle period is Tz = 0.1 ms.

In some embodiments, the communication device determines whether a target channel is idle according to an amplitude of a signal received by the first receiver in a process of listening to the target channel and a signal amplitude threshold.

In some embodiments, the communication device determines that the target channel is non-idle in a case where the amplitude of the signal received by the first receiver in the process of listening to the target channel is greater than or equal to the signal amplitude threshold; and/or, the communication device determines that the target channel is idle in a case where the amplitude of the signal received by the first receiver in the process of listening to the target channel is less than the signal amplitude threshold.

In some embodiments, the signal amplitude threshold is specified by a protocol, or the signal amplitude threshold is configured by a network device.

In some embodiments, the communication device transmits first capability information, where the first capability information is used to indicate that the communication device supports to perform channel listening through the first receiver.

Therefore, in the embodiments of the present application, the communication device may perform channel listening on the channel of the unlicensed spectrum through the low power consumption receiver or the zero power consumption receiver, which may reduce the power consumption of channel listening and also be more efficient to perform channel occupancy, thereby improving utilization rate of the channel. Channel listening performed by the first receiver may make a channel listening process of the communication device more power-saving.

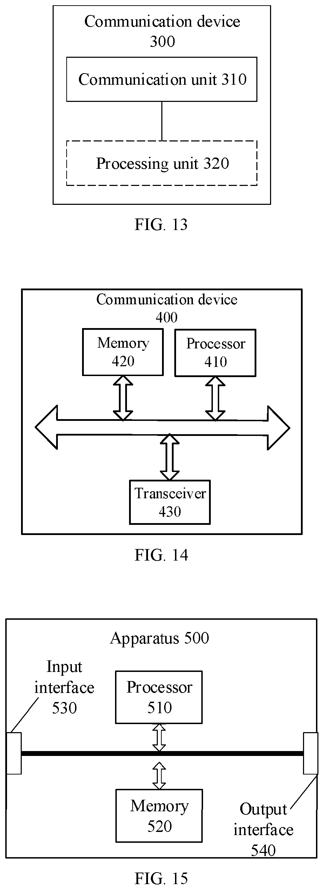

The method embodiments of the present application are described in detail above with reference to FIGS. 7 to 12, and device embodiments of the present application are described in detail below with reference to FIG. 13. It should be understood that the device embodiments and the method embodiments correspond to each other, and similar descriptions may be referred to the method embodiments.

FIG. 13 illustrates a schematic block diagram of a communication device 300 according to the embodiments of the present application. As illustrated in FIG. 13, the communication device 300 includes:
a communication unit 310 configured to perform channel listening through the first receiver;
where the first receiver is the low-power receiver, or the first receiver is the zero power consumption receiver.

In some embodiments, the communication unit 310 is specifically configured to:
perform channel listening within the first channel occupancy time (COT) through the first receiver; and/or
perform channel listening outside a first COT through the first receiver;
where the first COT is a COT obtained by the communication device through channel listening.

In some embodiments, in a case where the communication device performs channel listening within the first COT through the first receiver, the frequency of the channel corresponding to the first COT is different from the frequency of the channel to which the communication device listens through the first receiver.

In some embodiments, the frequency interval between the frequency of the channel corresponding to the first COT and the frequency of the channel to which the communication device listens through the first receiver is greater than or equal to the first threshold.

In some embodiments, the first threshold is specified by the protocol, or the first threshold is configured by the network device.

In some embodiments, where the first COT being the COT obtained by the communication device through the channel listening includes:
the first COT being the COT obtained by channel listening performed by the communication device through the first receiver, or the first COT being the COT obtained by channel listening performed by the communication device through the transceiver.

In some embodiments, the transceiver of the communication device is in the transmitting state within the first COT, or the transceiver of the communication device is in the receiving state within the first COT.

In some embodiments, the communication device 300 further includes: a processing unit 320, and
the processing unit 320 is configured to determine whether to perform channel listening through the first receiver according to the semi-statically configured channel listening mode.

In some embodiments, the receiver used by the communication device to perform listening within the first COT is different from the receiver used by the communication device to perform listening outside the first COT.

In some embodiments, the receivers used by the communication device to perform listening within and outside the first COT are specified by the protocol, or the receivers used by the communication device to perform listening within and outside the first COT are configured by the network device.

In some embodiments, the communication device 300 further includes: a processing unit 320; and
the processing unit 320 is configured to perform channel occupancy and data transmission on the target channel within the second COT through the transceiver in a case where the result of channel listening of the first receiver indicates that the target channel is idle and the second COT is obtained.

In some embodiments, the communication device 300 further includes: a processing unit 320; and
the processing unit 320 is configured to determine, according to the size of the gap between the first COT and the second COT, the type of channel listening to be performed by the transceiver of the communication device prior to start of the second COT.

In some embodiments, channel listening performed by the communication device through the first receiver is the dynamic channel listening.

In some embodiments, the first COT is the COT within the first fixed frame period (FFP), and the second COT is the COT within the second FFP; where the second FFP is the next FFP of the first FFP.

In some embodiments, channel listening performed by the communication device through the first receiver is the semi-static channel listening.

In some embodiments, the processing unit 320 is configured to determine whether the target channel is idle according to the amplitude of the signal received by the first receiver in the process of listening to the target channel and the signal amplitude threshold.

In some embodiments, the processing unit 320 is specifically configured to:
determine that the target channel is non-idle in a case where the amplitude of the signal received by the first receiver in the process of listening to the target channel is greater than or equal to the signal amplitude threshold; and/or
determine that the target channel is idle in a case where the amplitude of the signal received by the first receiver in the process of listening to the target channel is less than the signal amplitude threshold.

In some embodiments, the signal amplitude threshold is specified by the protocol, or the signal amplitude threshold is configured by the network device.

In some embodiments, the communication unit 310 is further configured to transmit the first capability information, where the first capability information is used to indicate that the communication device supports to perform channel listening through the first receiver.

In some embodiments, the communication device is the terminal device or the network device for uplink and downlink communication in the cellular network, or the communication device is the terminal device for sidelink communication in the cellular network, or the communication device is the access point (AP) device or the station (STA) device in the wireless local area network (WLAN).

In some embodiments, the above communication unit may be a communication interface or a transceiver, or an input-output interface of a communication chip or a system-on-chip. The above processing unit may be one or more processors.

It should be understood that the communication device 300 according to the embodiments of the present application may correspond to the communication device in the method embodiments of the present application, and the above and other operations and/or functions of each unit of the communication device 300 are intend to implement the corresponding processes of the communication device in the method 200 illustrated in FIG. 7, respectively, which will not be repeated here for the sake of brevity.

FIG. 14 is a schematic structural diagram of a communication device 400 provided by the embodiments of the present application. The communication device 400 illustrated in FIG. 14 includes a processor 410, and the processor 410 may invoke and execute a computer program from a memory to implement the method in the embodiments of the present application.

In some embodiments, as illustrated in FIG. 14, the communication device 400 may also include a memory 420. Herein, the processor 410 may invoke and execute a computer program from the memory 420 to implement the method in the embodiments of the present application.

The memory 420 may be a separate device independent from the processor 410, or may be integrated into the processor 410.

In some embodiments, as illustrated in FIG. 14, the communication device 400 may also include a transceiver 430, and the processor 410 may control the transceiver 430 to communicate with other devices, and specifically, to transmit information or data to other devices, or receive information or data transmitted by the other devices.

The transceiver 430 may include a transmitter and a receiver. The transceiver 430 may further include antenna(s). There may be one or more antennas.

In some embodiments, the communication device 400 may be the communication device of the embodiments of the present application, and the communication device 400 may implement the corresponding processes implemented by the communication device in various methods of the embodiments of the present application, which will not be repeated here for the sake of brevity.

FIG. 15 is a schematic structural diagram of an apparatus according to the embodiments of the present application. An apparatus 500 illustrated in FIG. 15 includes a processor 510, and the processor 510 may invoke and execute a computer program from a memory to implement the method in the embodiments of the present application.

In some embodiments, as illustrated in FIG. 15, the apparatus 500 may also include a memory 520. Herein, the processor 510 may invoke and execute a computer program from the memory 520 to implement the method in the embodiment of the present application.

The memory 520 may be a separate device independent from the processor 510 or may be integrated into the processor 510.

In some embodiments, the apparatus 500 may also include an input interface 530. The processor 510 may control the input interface 530 to communicate with other devices or chips, and specifically, to obtain information or data transmitted by other devices or chips.

In some embodiments, the apparatus 500 may also include an output interface 540. The processor 510 may control the output interface 540 to communicate with other devices or chip, and specifically, to output information or data to other devices or chips.

In some embodiments, the apparatus may be applied to the communication device in the embodiments of the present application, and the apparatus may implement the corresponding processes implemented by the communication device in various methods of the embodiments of the present application, which will not be repeated here for the sake of brevity.

In some embodiments, the apparatus mentioned in the embodiments of the present application may also be a chip. For example, the chip may be a system-level chip, a system chip, a chip system or a system-on-chip, or the like.

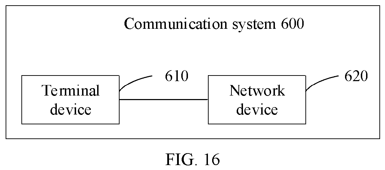

FIG. 16 is a schematic block diagram of a communication system 600 provided by the embodiments of the present application. As illustrated in FIG. 16, the communication system 600 includes a terminal device 610 and a network device 620.

The terminal device 610 may be configured to implement the corresponding functions implemented by the communication device in the above method, or the network device 620 may be configured to implement the corresponding functions implemented by the communication device in the above method, which will not be repeated here for the sake of brevity.

It should be understood that the processor of the embodiments of the present application may be an integrated circuit chip with signal processing capability. In the implementation process, each step of the above method embodiments may be completed by the instructions in the form of integrated logic circuit of hardware or software in the processor. The above processors may be a general purpose processor, a digital signal processor (DSP), an application specific integrated circuit (ASIC), a field programmable gate array (FPGA), other programmable logic device, a discrete gate, a transistor logic device, or a discrete hardware component, which may implement or execute the disclosed methods, steps and logic block diagrams in the embodiments of the present disclosure. The general purpose processor may be a microprocessor, or the processor may be any conventional processor, or the like. The steps of the methods disclosed in connection with the embodiments of the present disclosure may be directly embodied in the execution completion of the hardware decoding processor, or by the combination of the hardware and software modules in the decoding processor. The software module may be located in a random memory, a flash memory, a read-only memory, a programmable read-only memory, an electrically erasable programmable memory, a register or other mature storage media in the art. The storage medium is located in the memory, and the processor reads the information in the memory and completes the steps of the above method in combination with its hardware.

It will be understood that the memory in the embodiments of the present application may be a volatile memory or a non-volatile memory, or may include both the volatile memory and non-volatile memory. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM), which is used as an external cache. As an example but not a limitation for illustration, many forms of the RAM are available, such as, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct Rambus random access memory (Direct Rambus RAM, DR RAM). It should be noted that the memory of the systems and methods described herein is intended to include, but is not limited to, these and any other suitable types of memories.

It should be understood that the above memory is exemplary but not limited illustration. For example, the memory in the embodiments of the present application may also be a static random access memory (static RAM, SRAM), a dynamic random access memory (dynamic RAM, DRAM), a synchronous dynamic random access memory (synchronous DRAM, SDRAM)), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct Rambus random access memory (Direct Rambus RAM, DR RAM), etc. That is, the memory in the embodiments of the present application is intended to include, but not limited to, these and any other suitable types of memories.

The embodiments of the present application further provide a computer readable storage medium for storing a computer program.

In some embodiments, the computer readable storage medium may be applied to the communication device in the embodiments of the present application, and the computer program causes a computer to perform the corresponding processes implemented by the communication device in various methods of the embodiments of the present application, which will not be repeated here for the sake of brevity.

The embodiments of the present application further provide a computer program product, including computer program instructions.

In some embodiments, the computer program product may be applied to the communication device in the embodiments of the present application, and the computer program instructions causes a computer to perform the corresponding processes implemented by the communication device in various methods of the embodiments of the present application, which will not be repeated here for the sake of brevity.

The embodiments of the present application further provide a computer program.

In some embodiments, the computer program may be applied to the communication device in the embodiment of the present application, and the computer program, when running on a computer, causes the computer to perform the corresponding processes implemented by the communication device in various methods of the embodiments of the present application, which will not be repeated here for the sake of brevity.

Those of ordinary skill in the art will appreciate that the units and algorithm operations of each example described in connection with the embodiments disclosed herein may be implemented by electronic hardware, or by the combination of computer software and electronic hardware. Whether these functions are performed in hardware or software depends on the specific application and design constraints of the technical solutions. A professional technician may use different methods to implement the described functions for each specific application, but such implementation is not considered to be beyond the scope of the present application.

Those skilled in the art may clearly understand that for the convenience and brevity of the description, the specific working processes of the system, apparatus and unit described above may refer to the corresponding procedures in the embodiments of the method above, and will not be repeated herein.

In several embodiments provided by the present application, it should be understood that the disclosed system, apparatus and method may be implemented in other ways. For example, the embodiments of the apparatus described above are only schematic, for example, the division of the unit is only a logical functional division, and there may be another division way in the actual implementation, for example, multiple units or components may be combined or integrated into another system, or some features may be ignored or not implemented. On the other aspect, the mutual coupling or direct coupling or communication connection illustrated or discussed may be indirect coupling or communication connection through some interfaces, apparatus or units, and may be electrical, mechanical or other forms.

The units described as separation parts may or may not be physically separated, and the component displayed as a unit may or may not be a physical unit, that is, it may be located at one place, or it may be distributed to multiple network units. Some or all of the units may be selected according to actual requirements to achieve the purpose of the schemes of the embodiments.

In addition, various functional units in each embodiment of the present application may be integrated into one processing unit, various units may exist physically alone, or two or more units may be integrated into one unit.

If the function is implemented in the form of a software functional unit and is sold or used as an independent product, it can be stored in a computer readable storage medium. Based on such an understanding, the technical solutions of the present application, in essence or the part that contributes to the prior art or the part of the technical solutions, may be embodied in the form of a software product, the computer software product is stored in a storage medium, includes multiple instructions for making a computer device (which may be a personal computer, a server, a network device, etc.) to perform all or part of the steps of the method according to each embodiment of the present application. The aforementioned storage media includes a media that may store a program code, such as a U disk, a mobile hard disk, a read-only memory (ROM), a random access memory (RAM), a disk or an optical disk.

The foregoing descriptions are merely specific implementations of the present application, but the protection scope of the present application is not limited thereto. Any skilled person in the art could readily conceive of changes or replacements within the technical scope of the present application, which shall be all included in the protection scope of the present application. Therefore, the protection scope of the present application shall be subject to the protection scope of claims.

## Claims

1. A channel listening method, **characterized by** comprising:
performing, by a communication device, channel listening through a first receiver;
wherein the first receiver is a low power consumption receiver, or the first receiver is a zero power consumption receiver.

2. The method according to claim 1, wherein performing, by the communication device, channel listening through the first receiver comprises:
performing, by the communication device, channel listening within a first channel occupancy time (COT) through the first receiver; and/or
performing, by the communication device, channel listening outside a first COT through the first receiver;
wherein the first COT is a COT obtained by the communication device through channel listening.

3. The method according to claim 2, wherein
in a case where the communication device performs channel listening within the first COT through the first receiver, a frequency of a channel corresponding to the first COT is different from a frequency of a channel to which the communication device listens through the first receiver.

4. The method according to claim 3, wherein
a frequency interval between the frequency of the channel corresponding to the first COT and the frequency of the channel to which the communication device listens through the first receiver is greater than or equal to a first threshold.

5. The method according to claim 4, wherein
the first threshold is specified by a protocol, or the first threshold is configured by a network device.

6. The method according to any one of claims 2 to 5, wherein the first COT being the COT obtained by the communication device through the channel listening comprises:
the first COT being a COT obtained by channel listening performed by the communication device through the first receiver, or the first COT being a COT obtained by channel listening performed by the communication device through a transceiver.

7. The method according to any one of claims 2 to 6, wherein a transceiver of the communication device is in a transmitting state within the first COT, or a transceiver of the communication device is in a receiving state within the first COT.

8. The method according to any one of claims 2 to 7, further comprising:
determining, by the communication device, whether to perform channel listening through the first receiver according to a semi-statically configured channel listening mode.

9. The method according to any one of claims 2 to 7, wherein a receiver used by the communication device to perform listening within the first COT is different from a receiver used by the communication device to perform listening outside the first COT.

10. The method according to claim 9, wherein receivers used by the communication device to perform listening within and outside the first COT are specified by a protocol, or receivers used by the communication device to perform listening within and outside the first COT are configured by a network device.

11. The method according to any one of claims 2 to 10, further comprising:
performing, by the communication device, channel occupancy and data transmission on a target channel within a second COT through a transceiver in a case where a result of channel listening of the first receiver indicates that the target channel is idle and the second COT is obtained.

12. The method according to claim 11, further comprising:
determining, by the communication device according to a size of a gap between the first COT and the second COT, a type of channel listening to be performed by the transceiver of the communication device prior to start of the second COT.

13. The method according to claim 12, wherein channel listening performed by the communication device through the first receiver is dynamic channel listening.

14. The method according to claim 11, wherein
the first COT is a COT within a first fixed frame period (FFP), and the second COT is a COT within a second FFP;
wherein the second FFP is a next FFP of the first FFP.

15. The method according to claim 14, wherein channel listening performed by the communication device through the first receiver is semi-static channel listening.

16. The method according to any one of claims 1 to 15, wherein performing, by the communication device, channel listening through the first receiver comprises:
determining, by the communication device, whether a target channel is idle according to an amplitude of a signal received by the first receiver in a process of listening to the target channel and a signal amplitude threshold.

17. The method according to claim 16, wherein determining, by the communication device, whether the target channel is idle according to the amplitude of the signal received by the first receiver in the process of listening to the target channel and the signal amplitude threshold comprises:
determining, by the communication device, that the target channel is non-idle in a case where the amplitude of the signal received by the first receiver in the process of listening to the target channel is greater than or equal to the signal amplitude threshold; and/or
determining, by the communication device, that the target channel is idle in a case where the amplitude of the signal received by the first receiver in the process of listening to the target channel is less than the signal amplitude threshold.

18. The method according to claim 16 or 17, wherein
the signal amplitude threshold is specified by a protocol, or the signal amplitude threshold is configured by a network device.

19. The method according to any one of claims 1 to 18, further comprising:
transmitting, by the communication device, first capability information, wherein the first capability information is used to indicate that the communication device supports to perform channel listening through the first receiver.

20. The method according to any one of claims 1 to 19, wherein
the communication device is a terminal device or a network device for uplink and downlink communication in a cellular network, or the communication device is a terminal device for sidelink communication in a cellular network, or the communication device is an access point (AP) device or a station (STA) device in a wireless local area network (WLAN).

21. A communication device, **characterized by** comprising:
a communication unit, configured to perform channel listening through a first receiver;
wherein the first receiver is a low power consumption receiver, or the first receiver is a zero power consumption receiver.

22. A communication device, **characterized by** comprising: a processor and a memory, wherein the memory is configured to store a computer program, and the processer is configured to invoke and execute the computer program stored in the memory, to cause the communication device to perform the method according to any one of claims 1 to 20.

23. A chip, **characterized by** comprising: a processor, wherein the processer is configured to invoke and execute a computer program from a memory, to cause a device equipped with the chip to perform the method according to any one of claims 1 to 20.

24. A computer readable storage medium, **characterized in that** the computer readable storage medium is used to store a computer program, wherein the computer program causes a computer to perform the method according to any one of claims 1 to 20.

25. A computer program product, **characterized by** comprising: computer program instructions, wherein the computer program instructions cause a computer to perform the method according to any one of claims 1 to 20.

26. A computer program, **characterized in that** the computer program causes a computer to perform the method according to any one of claims 1 to 20.
